# EUROPEAN PATENT SPECIFICATION

(11) **EP 4 307 059 B1**
(45) Date of publication and mention of the grant of the patent: **28.10.2026**
(21) Application number: 21930275.9
(22) Date of filing: 21.09.2021
(51) Int. Cl.: G05B 19/05, G06F 8/33

(54) **DEVELOPMENT SUPPORT DEVICE, DEVELOPMENT SUPPORT METHOD, AND DEVELOPMENT SUPPORT PROGRAM**
ENTWICKLUNGSUNTERSTÜTZUNGSVORRICHTUNG, ENTWICKLUNGSUNTERSTÜTZUNGSVERFAHREN UND ENTWICKLUNGSUNTERSTÜTZUNGSPROGRAMM
DISPOSITIF DE SUPPORT DE DÉVELOPPEMENT, PROCÉDÉ DE SUPPORT DE DÉVELOPPEMENT ET PROGRAMME DE SUPPORT DE DÉVELOPPEMENT

(30) Priority: 11.03.2021 JP 2021039323
(43) Date of publication of application: 17.01.2024
(73) Proprietor: OMRON Corporation, Kyoto 600-8530 (JP)
(72) Inventor: NAGAO, Kenjiro, Kyoto-shi, Kyoto 600-8530 (JP)
(74) Representative: Mewburn Ellis LLP
(86) International application number: PCT/JP2021/034612
(87) International publication number: WO 2022/190427

(56) References cited:
- JP-A- 2002 062 910
- JP-A- 2002 062 910
- JP-A- 2005 044 316
- JP-A- 2005 352 612
- JP-A- 2009 009 607
- JP-A- 2009 009 607
- JP-A- 2012 168 598
- JP-A- 2017 204 090
- JP-A- 2020 064 399
- JP-A- 2020 190 827
- JP-A- H07 239 788

## Description

### TECHNICAL FIELD

The present disclosure relates to a technology for supporting development of a control program for a control device that controls a control target.

### BACKGROUND ART

A control device such as a programmable logic controller (PLC) has been introduced in various manufacturing sites as represented by a factory automation (FA) system. The control device as above is one type of computer, and can control a control target such as a manufacturing device or a manufacturing facility when a control program designed in accordance with the control target is executed. In general, the control program is created by using a development support device that is provided separately from the controller.

The control program as above is generally written with use of variables declared in advance. For example, Japanese Patent Laying-Open No. 2005-352612 (Patent Literature 1) discloses a program development support device that can enhance the development efficiency of a control program by enhancing the searchability of variables. In the program development support device of Patent Literature 1, the searchability of the variables is enhanced by performing narrowing-down that list-displays only variables with variable names including a keyword (character string) in accordance with a specification of the character string when an operand for a predetermined instruction is input.
JP2002062910A discloses an editor device.
JP2009009607A discloses sharing data in a system.

### CITATION LIST

### PATENT LITERATURE

PTL 1: Japanese Patent Laying-Open No. 2005-352612

### SUMMARY OF INVENTION

### TECHNICAL PROBLEM

In the source program of the control program, a definition list for declaring variables is provided, and the variables declared on the definition list is usable in the source code.

Meanwhile, the following occurs when the control program is changed or edited. A memory region corresponding to variables deleted in the source code is also secured at the time of execution of the control program when those variables are remaining on the definition list. Therefore, it is preferred that unnecessary variables be deleted from the definition list in terms of efficiently using the memory region of the control device.

Meanwhile, at the time of execution of the control program, the control target is controlled by constructing a network between the control device and the control target, and hence there is a fear that the control target may be affected when necessary variables are deleted.

The present disclosure has been made to solve the problem as described above, and an objective in a certain aspect is to provide a development support device capable of reducing an influence on the control target side due to the deletion of an unused variable in a control program for a control device that controls a control target. An objective in another aspect is to provide a development support method capable of reducing an influence on the control target side due to the deletion of an unused variable in a control program. An objective in still another aspect is to provide a development support program capable of reducing an influence on the control target side due to the deletion of an unused variable in a control program.

### SOLUTION TO PROBLEM

The invention is defined in the appended independent claims. According to one example of the present disclosure, a development support device for supporting development of a control program for a control device that controls a control target is provided. The development support device includes a storage unit, an extraction unit, an acquisition unit, and a determination unit. The storage unit is configured to store a source code of the control program and a first list that declares a plurality of variables used in the source code. The extraction unit is configured to extract a first variable that is unused in the source code from the plurality of variables on the first list. The acquisition unit is configured to acquire information for specifying a second variable having a possibility of being exchanged between the control target and the control device out of the plurality of variables in a state before execution of the control program. The determination unit is configured to determine that a variable corresponding to the second variable out of the first variable is indelible from the first list on the basis of a result of extraction by the extraction unit and the information acquired by the acquisition unit in the state before execution of the control program.

According to this disclosure, the development support device can set the second variables having a possibility of being used in the control target at the time of execution of the control program to be indelible from the first list even when the second variables are the unused variables in the source code of the control program. As a result, it becomes possible to reduce the influence on the control target side due to the deletion of the unused variables in the control program.

In the disclosure described above, each of the plurality of variables may have attribute information that defines whether the variable is public to a network including the control target and the control device. The acquisition unit may be configured to acquire the attribute information as information for specifying the second variable. The determination unit may be configured to determine that a variable specified to be public to the network by the attribute information out of the plurality of variables is indelible from the first list as the second variable.

According to this disclosure, information for specifying the second variables having a possibility of being used in the control target at the time of execution of the control program can be easily acquired on the basis of the attribute information defined for each variable.

In the disclosure described above, the acquisition unit may be configured to acquire a second list indicating a variable specified to be a target of exchange between the control target and the control device when the control program is executed, as information for specifying the second variable, in the state before execution of the control program.

According to this disclosure, the information for specifying the second variables used by the control target can be easily acquired with use of the list (second list) created in the state before execution of the control program.

In the disclosure described above, the acquisition unit may be configured to acquire the second list of one or more projects specified by a user as the information. The determination unit may be configured to execute the determination by regarding a variable included in the second list in at least one of the projects out of the plurality of variables to be the second variable.

According to this disclosure, when a plurality of projects are applied to the network including the control device and the control target, the user can select the range of the projects to which the unnecessary-variable deletion processing is applied.

In the disclosure described above, the determination unit may be configured to determine that a third variable that does not correspond to the second variable out of the first variable is delible from the first list on the basis of a result of extraction by the extraction unit and the information acquired by the acquisition unit in the state before execution of the control program.

According to this disclosure, the variables delible from the first list can be determined by excluding the second variables having a possibility of being used in the control target at the time of execution of the control program from the unused variables in the source code of the control program.

In the disclosure described above, the development support device may be configured to further include a variable deletion unit configured to delete the third variable from the first list.

According to this disclosure, the first list can be automatically updated to a content in which the third variables determined to be delible by the determination unit is deleted.

In the disclosure described above, the development support device may be configured to further include an interface unit for inputting an operation of a user. The extraction unit, the acquisition unit, and the determination unit may be configured to operate in accordance with an input of a first operation that activates deletion processing of an unnecessary variable on the interface unit. The interface unit may be configured to output a message asking the user whether to delete the third variable extracted by the determination unit from the first list. The variable deletion unit may be configured to operate in accordance with an input of a second operation that gives a command for deleting the third variable in accordance with the message on the interface unit.

According to this disclosure, in the deletion processing of the unnecessary variables activated in accordance with the user operation, the third variables determined to be delible by the determination unit can be deleted from the first list after confirmation by the user.

In another example of the present disclosure, a development support method of a control program for a control device that controls a control target to be executed by a computer is provided. The development support method includes: extracting a first variable that is unused in a source code of the control program from a list that declares a plurality of variables used in the source code; acquiring information for specifying a second variable having a possibility of being exchanged between the control target and the control device out of the plurality of variables in a state before execution of the control program; and determining that a variable corresponding to the second variable out of the first variable is indelible from the list on the basis of a result of extraction by the extracting and the information acquired by the acquiring in the state before execution of the control program.

In still another example of the present disclosure, a development support program of a control program for a control device that controls a control target is provided. The development support program causes a computer to execute: extracting a first variable that is unused in a source code of the control program from a list that declares a plurality of variables used in the source code; acquiring information for specifying a second variable having a possibility of being exchanged between the control target and the control device out of the plurality of variables in a state before execution of the control program; and determining that a variable corresponding to the second variable out of the first variable is indelible from the list on the basis of a result of extraction by the extracting and the information acquired by the acquiring in the state before execution of the control program.

According to this disclosure, the development support method and the development support program can set the second variables having a possibility of being used in the control target at the time of execution of the control program to be indelible from the list even when the second variables are the unused variables in the source code of the control program. As a result, it becomes possible to reduce the influence on the control target side due to the deletion of the unused variables in the control program.

### ADVANTAGEOUS EFFECTS OF INVENTION

According to the present disclosure, it becomes possible to reduce the influence on the control target side due to the deletion of the unused variable in the control program for the control device that controls the control target.

### BRIEF DESCRIPTION OF DRAWINGS

Fig. 1 is an outline diagram illustrating a configuration example of an FA system to which a development support device according to an embodiment of the present invention is applied.
Fig. 2 is a schematic diagram illustrating one example of a hardware configuration of the development support device.
Fig. 3 is a conceptual diagram describing an operation of a control program.
Fig. 4 is a conceptual diagram describing one example of the control program.
Fig. 5 is a block diagram describing a configuration of a first example of unnecessary-variable deletion processing by the development support device according to the present embodiment.
Fig. 6 is a flowchart describing the first example of the unnecessary-variable deletion processing by the development support device according to the present embodiment.
Fig. 7 is a flowchart describing a modified example of the unnecessary-variable deletion processing in Fig. 6.
Fig. 8 is an outline diagram describing an aspect of accessing a control device from an external apparatus.
Fig. 9 is a conceptual diagram describing an operation of the control program to which a second example of the unnecessary-variable deletion processing is applied.
Fig. 10 is a block diagram describing a configuration of the second example of the unnecessary-variable deletion processing by the development support device according to the present embodiment.
Fig. 11 is a flowchart describing the second example of the unnecessary-variable deletion processing by the development support device according to the present embodiment.

### DESCRIPTION OF EMBODIMENTS

Hereinafter, with reference to the drawings, each embodiment of the present invention will be described. In the following description, the same components and constituents are given the same reference characters. The same applies to names and functions thereof. Therefore, a detailed description thereof will not be repeated in principle.

### <Application Example>

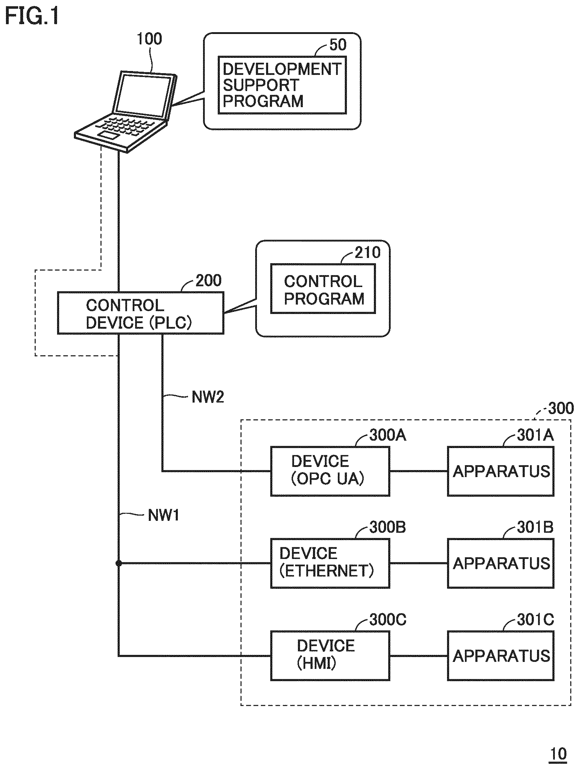

Fig. 1 is an outline diagram illustrating one example of a configuration of an FA system 10 to which a development support device according to an embodiment of the present invention is applied. First, with reference to Fig. 1, a system configuration of FA system 10 is described.

FA system 10 includes one or more development support devices 100, one or more control devices (controllers) 200, and external apparatuses 300 controlled by control device 200.

Development support device 100 is a notebook or desktop personal computer (PC), a tablet terminal, a smartphone, or other information processing devices, for example.

A development support program 50 is installed in development support device 100. Development support program 50 is an application for supporting development of a control program 210 for control device 200. Development support program 50 is "Sysmac Studio" manufactured by OMRON Corporation, for example. A user can design a control program for control device 200 on development support program 50 and download designed control program 210 to the controller. Alternatively, development support device 100 can upload data and the like from control device 200.

Control device 200 and external apparatuses 300 are connected to a network NW1 to which development support device 100 can be connected. Ethernet (R) and the like are employed as network NW1. Control device 200 is configured by a PLC, for example.

Control device 200 and external apparatuses 300 are connected to a network NW2. A field network that ensures data arrival time and performs fixed period communication is preferably employed as network NW2. As a field network performing the fixed period communication as above, OPC UA (R) and the like are known.

External apparatuses 300 are configured by various industrial apparatuses, various sensors, a human machine interface (HMI) apparatus, and the like used to automate a production process. External apparatuses 300 include apparatuses 301A to 301C and devices 300A to 300C connected to network NW1 or NMW2. Apparatuses 301A to 301C are communicably connected to control device 200 by devices 300A to 300C via networks NW1, NW2. As a result, apparatuses 301A to 301C can be controlled by a control program executed by control device 200. In other words, external apparatus 300 corresponds to a "control target" controlled by the control program.

In the example of Fig. 1, device 300A connected to apparatus 301A is connected to network NW2 to which OPC UA is applied. Device 300B connected to apparatus 301B and device 300C connected to apparatus 301C are connected to network NW1 to which Ethernet is applied.

### <Configuration of Development Support Device>

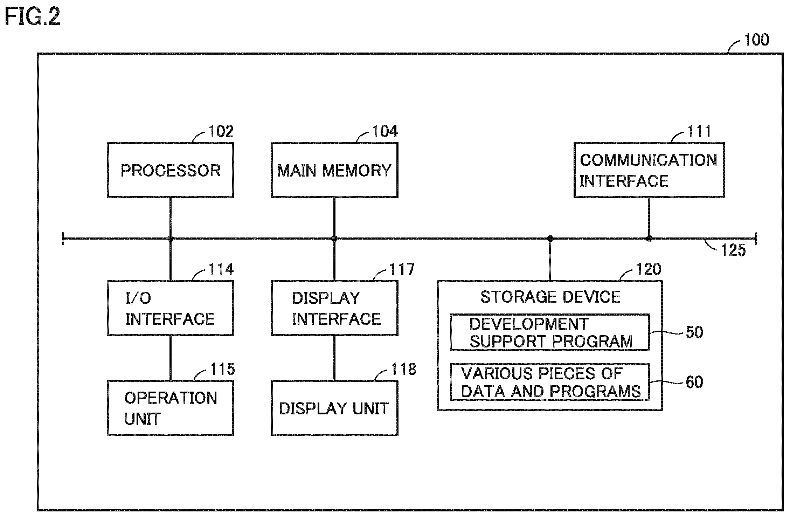

Fig. 2 illustrates a schematic diagram illustrating one example of a hardware configuration of development support device 100.

Development support device 100 is formed by a computer configured according to a general-purpose computer architecture, for example. Development support device 100 includes a processor 102 such as a central processing unit (CPU) or a micro-processing unit (MPU), a main memory 104, a communication interface 111, an input/output (I/O) interface 114, a display interface 117, and a nonvolatile storage device 120. These components are communicably connected to each other via an internal bus 125.

Processor 102 activates a development tool of control program 210 (see Fig. 1) by loading development support program 50 stored in storage device 120 to main memory 104 and executing development support program 50. Storage device 120 stores therein not only development support program 50 but also various pieces of data and a program 60. A source program of control program 210 is stored in main memory 104 or storage device 120. In other words, main memory 104 and storage device 120 corresponds to one example of a "storage unit".

Communication interface 111 exchanges data with other communication apparatuses via a network. Those other communication apparatuses include control device 200 and external apparatuses 300 illustrated in Fig. 1 and a server (not shown), for example. Development support device 100 may be configured to be able to download various programs such as development support program 50 from those other communication apparatuses via communication interface 111.

I/O interface 114 is connected to an operation unit 115 and fetches a signal indicating a user operation from operation unit 115. Operation unit 115 is typically formed by a keyboard, a mouse, a touch screen, a touch pad, and the like, and receives an operation from the user. Operation unit 115 may be configured integrally with development support device 100 or may be configured separately from development support device 100.

Display interface 117 is connected to a display unit 118 and transmits an image signal for displaying an image to display unit 118 in response to a command from processor 102 or the like. Display unit 118 is configured by a liquid crystal display (LCD), an organic electro luminescence (EL) display, or the like and presents various pieces of information to the user. Display unit 118 may be configured integrally with development support device 100 or may be configured separately from development support device 100.

Fig. 2 illustrates a configuration example in which necessary functions are provided when processor 102 such as a CPU executes a program. However, some or all of those provided functions may be implemented with use of a dedicated hardware circuit (for example, an application specific integrated circuit (ASIC) or a field-programmable gate array (FPGA)). In this case, a plurality of OSs for different purposes may be parallelly executed, and necessary applications may be executed on each OS with use of a virtualization technology. In the description above, an example in which development support device 100 executes all processing has been exemplified. However, the present invention is not limited to the above, and a plurality of devices may provide functions as described above in cooperation with each other. Some or all of the functions may be realized with use of a calculation resource referred to as a so-called cloud on a server.

### <Control Program>

Next, the control program is described.

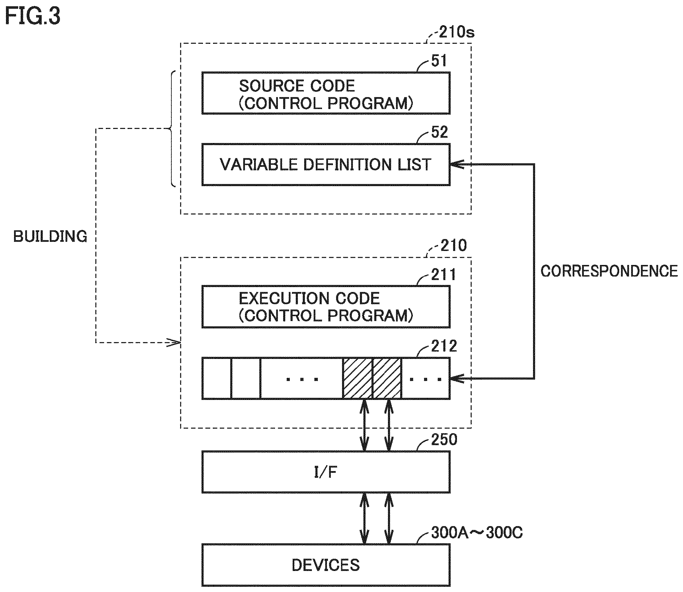

Fig. 3 illustrates a conceptual diagram describing an operation of the control program.

In development support device 100, a source program 210s including a source code 51 and a variable definition list 52 is created by an operation of the user using operation unit 115 and display unit 118. Source program 210s including source code 51 and variable definition list 52 is edited, as appropriate, by an operation of the user on development support device 100. In Fig. 3, source code 51 and variable definition list 52 are separately indicated, but source code 51 and variable definition list 52 can be an integrated file in source program 210s. Source program 210s can typically be written by freely-selected languages such as a ladder diagram (LD), an instruction list (IL), a structured text (ST), a function block diagram (FBD), a sequential function chart (SFC), and the like defined in IEC61131-3. In the description below, as a typical example, a case where the source program is written by a ladder program (LD) is described.

In development support device 100, source program 210s is built. As a result, an execution code 211 of control program 210 is created and downloaded to control device 200. At this time, in control device 200, a memory region 212 for storing therein variables declared on variable definition list 52 is secured for control program 210.

Devices 300A to 300C can access the variables in memory region 212 by performing data communication by network NW1 or NW2 via a network interface 250. For example, in the example in Fig. 3, a variable stored in a region in which diagonal lines are drawn is accessed from external apparatuses 300 (devices 300A to 300C). Alternatively, on the contrary, data can also be input to control device 200 (memory region 212) from the side of devices 300A to 300C.

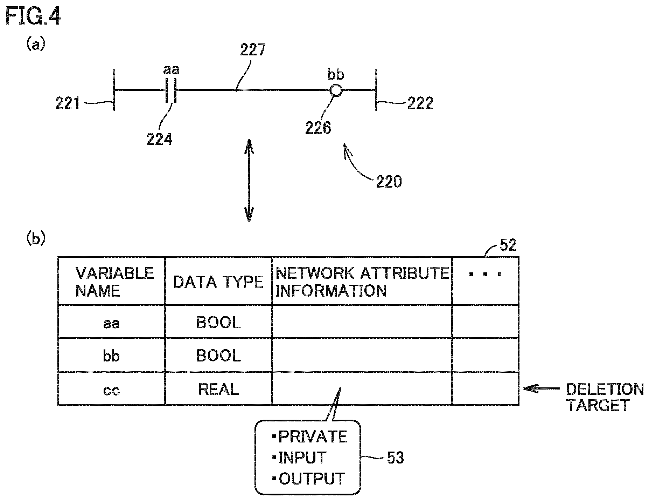

Fig. 4 illustrates a conceptual diagram describing one example of the control program. Fig. 4(a) illustrates one example of a ladder circuit written by the ladder program that is one example of the control program. Fig. 4(b) illustrates one example of the variable definition list described in Fig. 3.

As illustrated in Fig. 4(a), the ladder program is expressed by a ladder circuit 220 illustrating a logic circuit using circuit elements and a connection line between an input-side bus bar 221 and an output-side bus bar 222 in a ladder-like form.

In the example in Fig. 4(a), ladder circuit 220 includes a contact 224 that is turned on/off in accordance with the value of a variable aa, and a coil 226 that outputs the on/off result as a variable bb. The ladder circuit is drawn by connecting circuit elements such as contact 224 and coil 226 to each other by a connection line 227. For example, variable bb is further used as a variable that opens and closes a contact of another ladder circuit (not shown). Alternatively, variable aa is an output value of a coil of another ladder circuit (not shown). By a hierarchical combination of the ladder circuits as above, a control operation for controlling external apparatuses 300 by control device 200 can be written.

As illustrated in Fig. 4(b), variable definition list 52 is created by declaring at least a variable name and a data type of the variable for each variable. The data type is selectively set from "BOOL", "REAL", "LREAL", and the like defined in advance. As described in Fig. 3, when the source program is built, a data region having a capacity in accordance with the selected data type is secured for each of the variables declared on variable definition list 52.

In the development support device according to the present embodiment, each variable has network attribute information 53. Network attribute information 53 is information that defines whether there is input/output of a variable value from control device 200 to networks NW1, NW2. Network attribute information 53 is declared as "output" in variables read out from control device 200 by devices 300A and 300B via networks NW1, NW2. Conversely, network attribute information 53 is declared as "input" in variables input to control device 200 from devices 300A and 300B via networks NW1, NW2. Meanwhile, network attribute information 53 is declared as "private" in variables that are neither "input" nor "output" with respect to networks NW1, NW2 from control device 200. As above, one of "output", "input", and "private" is declared for network attribute information 53 of each variable on variable definition list 52.

If a case where the source program is configured by ladder circuit 220 in Fig. 4(a) and variable definition list 52 in Fig. 4(b) is supposed, variables aa and bb are used in the ladder circuit (source code). Meanwhile, although a variable cc is declared, variable cc is unused in the ladder circuit. A region for storing therein variable cc is secured in memory region 212 of control device 200 when the source program is built in this case as well. Therefore, the memory region of control device 200 can be freed up by deleting unused variable cc from variable definition list 52. As a result, an unnecessary memory region does not need to be secured, and hence the memory usage efficiency of control device 200 improves.

Meanwhile, there may be variables accessed from external apparatuses 300 to control device 200 even when the variables are unused in the ladder circuit, in other words, the source program. Therefore, when variables unused in the source program are extracted and are deleted from automatically variable definition list 52, there is a fear that the side of external apparatuses 300 may be affected by deleting the variables as described above.

### <First Example of Unnecessary-variable Deletion Processing According to Present Embodiment>

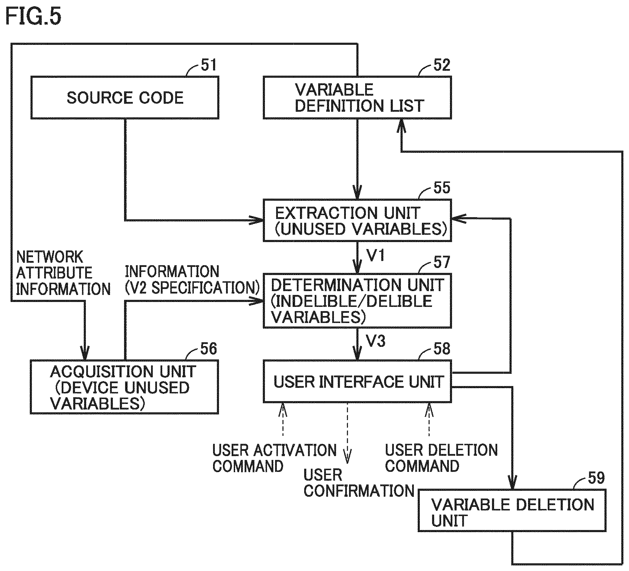

Fig. 5 is a block diagram describing a configuration of a first example of unnecessary-variable deletion processing by the development support device according to the present embodiment.

Development support device 100 includes an extraction unit 55, an acquisition unit 56, a determination unit 57, a user interface unit 58, and a variable deletion unit 59. For example, when processor 102 of development support device 100 executes development support program 50, each of acquisition unit 56, determination unit 57, user interface unit 58, and variable deletion unit 59 is realized as some of functions of the program. User interface unit 58 covers I/O interface 114 and display interface 117 illustrated in Fig. 2.

User interface unit 58 starts the unnecessary-variable deletion processing when an activation command for the unnecessary-variable deletion processing is input to operation unit 115. For example, the user can input the activation command for the unnecessary-variable deletion processing by performing selecting and inputting on a menu screen displayed on display unit 118. The operation for the activation command corresponds to a "first operation".

When the unnecessary-variable deletion processing is started, extraction unit 55 collates source code 51 and variable definition list 52 and extracts unused variables V1 that are unused in source code 51. For example, in the example in Fig. 4, variable cc is extracted as unused variable V1. Unused variable V1 corresponds to a "first variable", and variable definition list 52 corresponds to one example of a "first list" or a "list".

Acquisition unit 56 acquires network attribute information 53 described in Fig. 4 from variable definition list 52. A variable of which attribute is not "private", in other words, a variable of which "input" or "output" with respect to the network is declared can be determined to be a variable having a possibility of being used in external apparatuses 300 on the basis of network attribute information 53. In other words, network attribute information 53 is equivalent to one example of information for specifying a variable (hereinafter also referred to as a "device usage variable V2") having a possibility of being exchanged between control device 200 and external apparatuses 300 when control program 210 is executed.

Determination unit 57 determines that variables corresponding to device usage variable V2 out of unused variables V1 are indelible from variable definition list 52 on the basis of unused variables V1 extracted by extraction unit 55 and device usage variables V2 specified from the information acquired by acquisition unit 56. Determination unit 57 determines that variables not corresponding to device usage variables V2 out of unused variables V1 are delible variables V3 delible from control program 210.

Therefore, out of unused variables V1, only variables of which network attribute information 53 is defined to be "private" are determined to be delible variables V3, and variables of which network attribute information 53 is defined to be "input" or "output" are determined to be indelible from variable definition list 52.

User interface unit 58 notifies the user of delible variables V3 and requests the user to confirm whether the deletion of delible variables V3 may be executed with use of display unit 118. For example, characters and figures for clicking "YES" or "NO" for a display indicating "Would you like to delete these variables?" can be output to display unit 118.

User interface unit 58 generates an automatic deletion command to variable deletion unit 59 when the deletion command of the user is input when "YES" is clicked on the display. The operation for the deletion command corresponds to a "second operation".

When the automatic deletion command is input, variable deletion unit 59 deletes delible variables V3 from the variables included in variable definition list 52. From the above, variable definition list 52 is updated to a content in which delible variables V3 are deleted.

As a result, according to development support device 100 according to the present embodiment, in a stage before the execution of control program 210, delible variables V3 delible from variable definition list 52 can be automatically determined by excluding variables having a possibility of being used in external apparatuses 300 (control target) at the time of the execution of control program 210. Variable definition list 52 can be updated to a content in which automatically determined delible variables V3 are deleted.

When the update of variable definition list 52 is completed, user interface unit 58 can output a message indicating that the unnecessary-variable deletion processing has ended to the user with use of display unit 118 and the like. In addition, a message prompting rebuilding of the source program (source code) may also be output to the user.

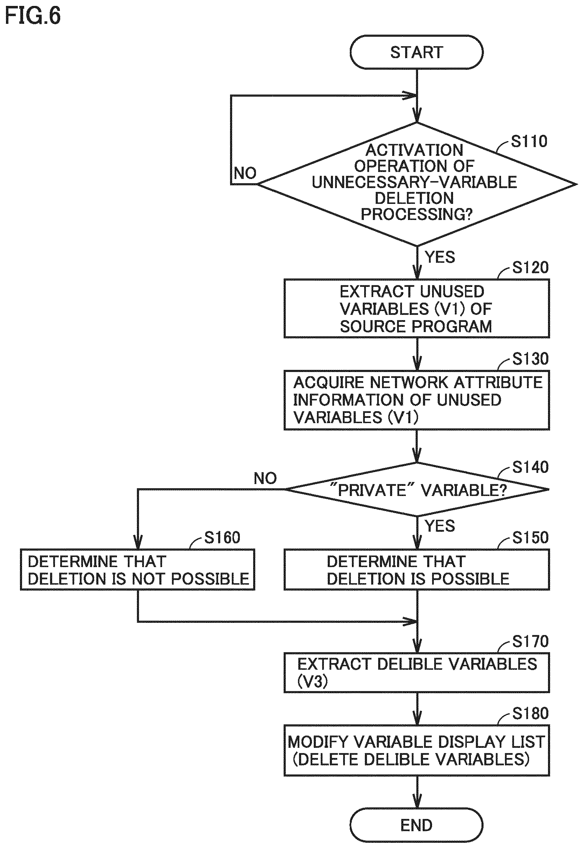

Fig. 6 is a flowchart of a first example of the unnecessary-variable deletion processing by the development support device according to the present embodiment. Processing of each step illustrated in Fig. 6 can be typically realized by software processing of executing development support program 50 by processor 102 of development support device 100.

In Step S110, development support device 100 determines whether the activation command of the unnecessary-variable deletion processing is input from the user. When the user command is not input (when it is determined that S110 is NO), processing of Step S120 and thereafter is placed on standby.

The processing proceeds to Step S120 when the user gives a command for activating the unnecessary-variable deletion processing (when it is determined that S110 is YES). In Step S120, development support device 100 extracts unused variables V1 that are unused in source code 51 by processing similar to that of extraction unit 55 in Fig. 5. In Step S130, development support device 100 acquires network attribute information 53 of unused variables V1 by processing similar to that of acquisition unit 56 in Fig. 5.

Alternatively, in Step S130, network attribute information 53 of all the variables included in variable definition list 52 can be acquired. In this case, Steps S120 and S130 may be parallelly processed or Step S130 may be executed before Step S120 in a manner opposite from Fig. 6.

Development support device 100 determines whether network attribute information 53 is "private" for each of unused variables V1 (S120) by Step S140 after Steps S120 and S130. As a result, out of unused variables V1, variables of which network attribute information 53 is "private" are determined to be delible by Step S150, and variables of which network attribute information 53 is not "private" are determined to be indelible by Step S160.

Development support device 100 sets the variables determined to be delible in Step S150 to be delible variables V3 delible from variable definition list 52 by Step S170 on the basis of the determination in Steps S140 to S160. Delible variables V3 can be extracted by the processing in Steps S140 to S170 as with determination unit 57 in Fig. 5.

In Step S180, development support device 100 deletes delible variables V3 from the variables included in variable definition list 52 as with variable deletion unit 59 illustrated in Fig. 5.

According to the control processing illustrated in Fig. 6, variable definition list 52 can be updated to a content in which automatically determined delible variables V3 are deleted by the activation of the unnecessary-variable deletion processing responding to the user activation command.

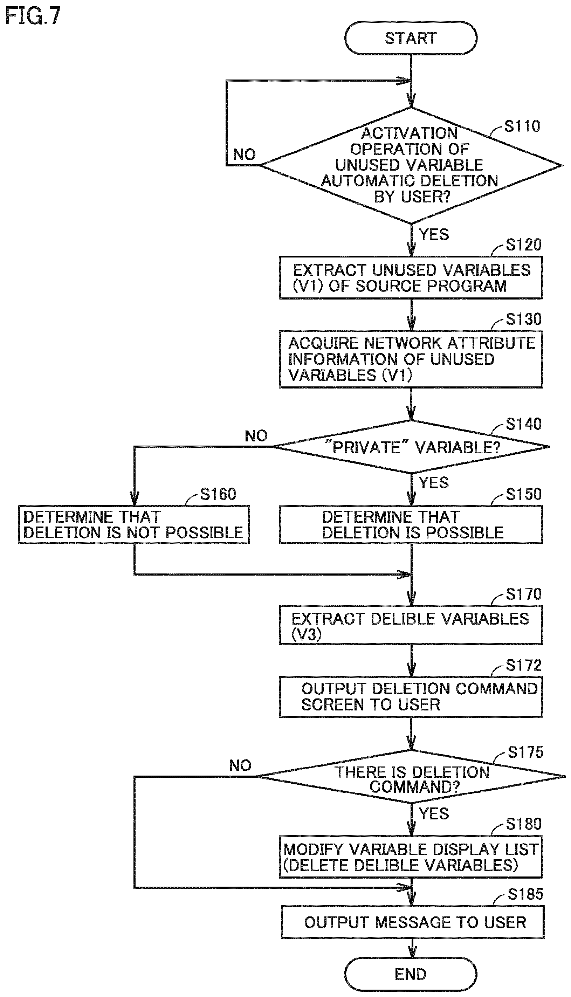

Alternatively, as illustrated in Fig. 7, development support device 100 can execute Steps S172, S175, S185 for the user interface processing also described in Fig. 5 in addition to the control processing in Fig. 6.

When the extraction of delible variables V3 by Step S170 is completed, development support device 100 notifies the user of delible variables V3 and requests the user to confirm whether the deletion of delible variables V3 may be executed with use of display unit 118 by S172.

Development support device 100 determines a user command with respect to the confirmation in Step S172 by Step S175. When a deletion command is input from the user, for example, when "YES" is clicked for a display indicating "Would you like to delete these variables?" by Step S170, it is determined that Step S175 is YES, and the processing proceeds to Step S180 for deleting delible variables V3.

Meanwhile, when "NO" is clicked for the display, it is determined that Step S175 is NO. Therefore, Step S180 is skipped, and the unnecessary-variable deletion processing is ended. In this case, delible variables V3 are not deleted, and variable definition list 52 is maintained to be the content before the activation of the unnecessary-variable deletion processing.

When variable definition list 52 is updated by Step S180, development support device 100 outputs a message indicating that the unnecessary-variable deletion processing has ended to the user by Step S185. When the variable deletion by Step S180 is executed, a message prompting the rebuilding of the source program for reflecting variable definition list 52 after the update may be further output in Step S185.

### <Second Example of Unnecessary-variable Deletion Processing According to Present Embodiment>

Next, unnecessary-variable deletion processing of determining whether the unused variables are delible or indelible on the basis of information on a link setting of external apparatuses 300 and control device 200 defined in the source program is described as a second example.

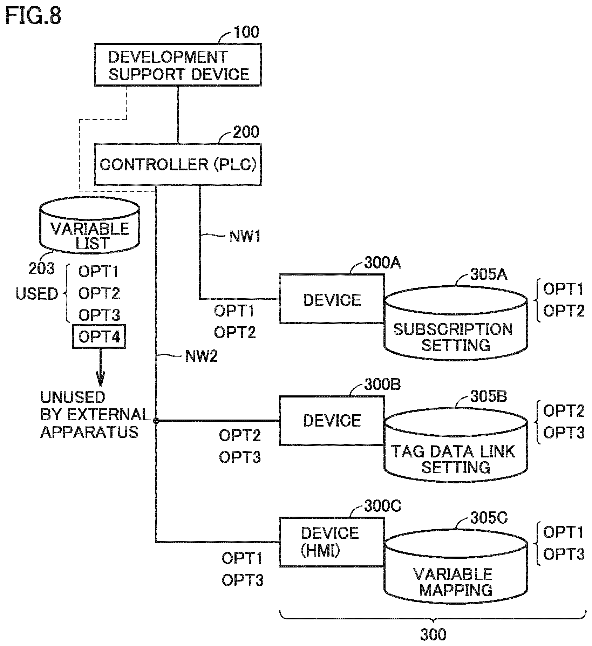

First, an aspect of accessing control device 200 from external apparatuses 300 is described with reference to Fig. 8.

A variable list 203 corresponding to variable definition list 52 is also created for control device 200 by building a source program created or edited by development support device 100. In other words, variables declared on variable definition list 52 are included in variable list 203. In the example in Fig. 8, variables OPT1 to OPT4 are included in the variables defined on variable definition list 52 and variable list 203.

In device 300A connected to control device 200 by network NW2, variables regularly read out by fixed period communication of the network are defined by a subscription setting 305A at the time of execution of the control program. In the example in Fig. 8, device 300A acquires the values of variables OPT1, OPT2 from control device 200 by accessing those variables in accordance with subscription setting 305A by fixed period communication. The values of variables OPT1, OPT2 are used for the monitoring of the state quantity and the like in apparatus 301A.

In device 300B connected to control device 200 by network NW1, a tag data link setting 305B that defines the correspondence relationship (link) between the variables to be read out from control device 200 and the variables in device 300B is created.

In the example in Fig. 8, device 300B acquires the values of variables OPT2, OPT3 of control device 200 by accessing those variables in accordance with tag data link setting 305B. The values of variables OPT2, OPT3 can be used in apparatus 301B in a similar manner as described above.

It is assumed that device 300C has a protocol in common with development support device 100. Therefore, device 300C can exchange data with development support device 100 directly or via control device 200 by network NW1. For example, device 300C acquires the values of variables OPT1, OPT3 from control device 200 by accessing those variables defined in a variable mapping 305C in advance. For example, device 300C is an HMI apparatus such as a display. The values of variables OPT1, OPT3 are used for displaying on the display.

In the example in Fig. 8, development support device 100 can determine that, out of variables OPT1 to OPT4 included in variable definition list 52 (in other words, variable list 203), variables OPT1 to OPT3 are used in external apparatuses 300 and variable OPT4 is unused in external apparatuses 300. In other words, when variable OPT4 is unused in the source program, it can be determined that the side of external apparatuses 300 is not influenced even when variable OPT4 is deleted.

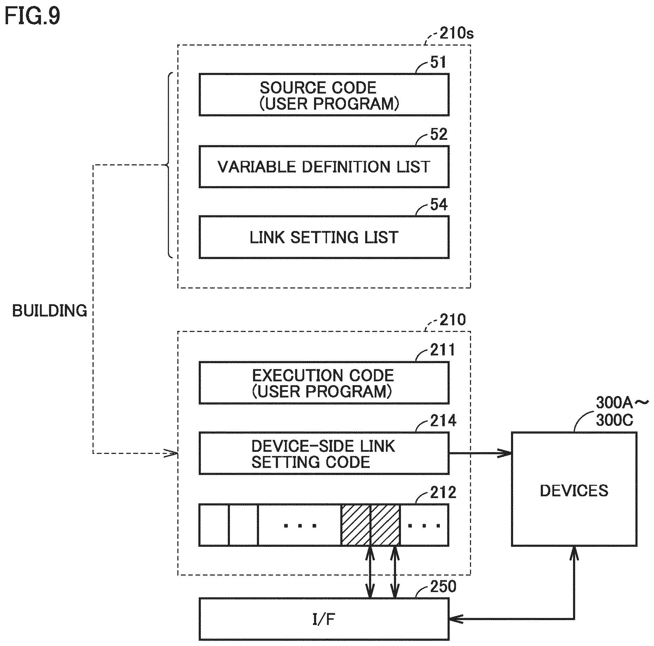

Fig. 9 illustrates a conceptual diagram for describing an operation of the control program to which the second example of the unnecessary-variable deletion processing is applied.

In Fig. 9, source program 210s further includes a link setting list 54 in addition to source code 51 and variable definition list 52 illustrated in Fig. 3. Network attribute information 53 described in Fig. 4 can be unnecessary in variable definition list 52.

On link setting list 54, the exchange of variables between control device 200 and external apparatuses 300 (devices 300A to 300C) on which subscription setting 305A, tag data link setting 305B, and variable mapping 305C described in Fig. 8 are based is written.

When source program 210s is built, a device-side link setting code 214 is generated in control program 210 in accordance with link setting list 54. Variables defined in subscription setting 305A, tag data link setting 305B, and a variable mapping 305C are set by device-side link setting code 214. As a result, at the time of execution of control program 210, the variables to be defined in subscription setting 305A, tag data link setting 305B, and variable mapping 305C are accessed from external apparatuses 300 in accordance with the content written on link setting list 54.

Therefore, in the stage of the source program, link setting list 54 can be used as one example of information for specifying variables (device usage variables V2) having a possibility of being exchanged between control device 200 and external apparatuses 300 at the time of execution of control program 210. In other words, link setting list 54 corresponds to one example of a "second list".

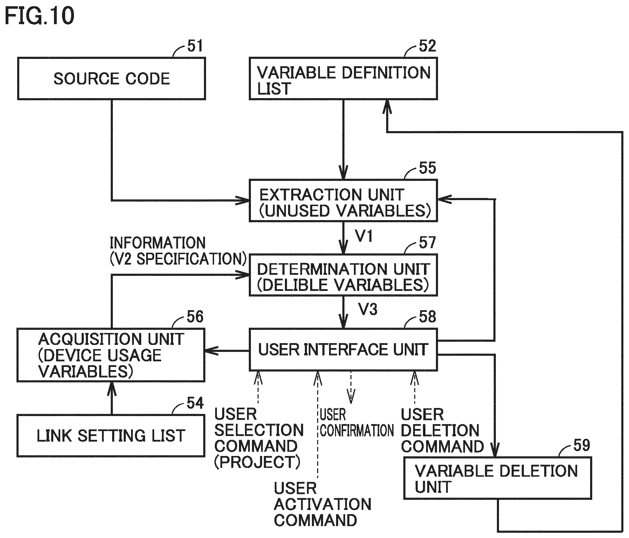

Fig. 10 is a block diagram describing a configuration of a second example of the unnecessary-variable deletion processing by the development support device according to the present embodiment.

The configuration in Fig. 10 is different from Fig. 5 in that acquisition unit 56 acquires link setting list 54 instead of network attribute information 53. When a plurality of projects are applied in a common network (Fig. 8), one or more projects to which the unnecessary-variable deletion processing is applied can be selected on the basis of a user-selected input on user interface unit 58. In this case, acquisition unit 56 acquires link setting list 54 according to the project selected by the user.

In the second example of the unnecessary-variable deletion processing illustrated in Fig. 10, configurations other than the feature in which the information for specifying device usage variables V2 is link setting list 54 are similar to those of Fig. 5. In other words, processing by extraction unit 55, determination unit 57, user interface unit 58, and variable deletion unit 59 according to unused variables V1, device usage variables V2, and delible variables V3 is similar to that of the first example of the unnecessary-variable deletion processing illustrated in Fig. 6.

Here, an example in which variables OPT1 to OPT4 illustrated in Fig. 8 are extracted as unused variables V1 by extraction unit 55 is assumed. It is understood that determination unit 57 can specify variables OPT1 to OPT3 as device usage variables V2 with use of link setting list 54 in the example in Fig. 8. Therefore, determination unit 57 can determine that, regarding variables OPT1 to OPT4 extracted as unused variables V1, variables OPT1 to OPT3 are indelible and variable OPT4 is delible. In other words, variable OPT4 can be extracted as delible variable V3.

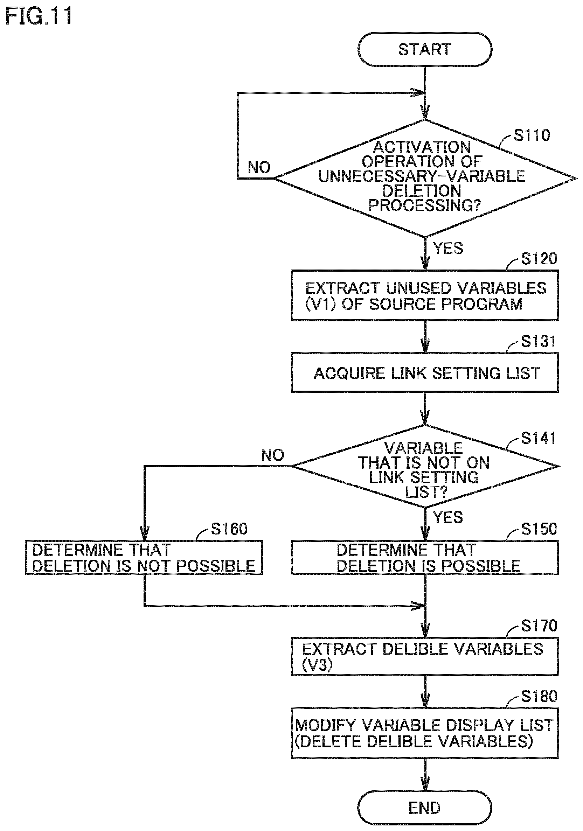

Fig. 11 is a flowchart of the second example of the unnecessary-variable deletion processing by the development support device according to the present embodiment. Processing of each step illustrated in Fig. 11 can also be typically realized by software processing of executing development support program 50 by processor 102 of development support device 100.

The flowchart illustrated in Fig. 11 is different from the flowchart illustrated in Fig. 6 in that development support device 100 executes each of Steps S131 and S141 instead of Steps S130 and S140 in Fig. 6.

In Step S131, development support device 100 acquires link setting list 54 by processing similar to that of acquisition unit 56 in Fig. 10. As described above, link setting list 54 according to one or more projects selected by the user can be acquired by Step S131. As a result, when a plurality of projects are applied in a common network (Fig. 8), the user can select the range of the projects to which the unnecessary-variable deletion processing is applied.

In Step S141, development support device 100 determines whether each of unused variables V1 (S120) is a variable that is not included in link setting list 54 acquired in Step S131. It is determined that the variables that are not included in link setting list 54 (when it is determined that S141 is YES) are delible by Step S150. Meanwhile, it is determined that the variables included in link setting list 54 (when it is determined that S141 is NO) are indelible by Step S160 similar to that in Fig. 6.

Processing of other Steps S110, S120, S170, and S180 is similar to that in Fig. 6, and hence detailed description thereof is not repeated. Alternatively, Steps S172, S175, and S185 similar to those in Fig. 7 can be applied to the flowchart of Fig. 11.

As a result, as with the first example described above, delible variables V3 delible from variable definition list 52 can also be automatically determined by excluding variables having a possibility of being used in external apparatuses 300 (control target) at the time of the execution of control program 210 by the second example of the unnecessary-variable deletion processing according to the development support device according to the present embodiment. Variable definition list 52 can be updated to a content in which automatically determined delible variables V3 are deleted.

As described above, according to the present disclosure, the influence of the deletion of the unused variables (V1) in the control program on the control target side can be reduced by extracting the unused variables (V1) in the source program and specifying the variables (V2) accessed from external apparatuses 300 (control target) at the time of execution of the control program.

### REFERENCE SIGNS LIST

10 FA system; 50 development support program; 51 source code; 52 variable definition list; 53 network attribute information; 54 link setting list; 55 extraction unit; 56 acquisition unit; 57 determination unit; 58 user interface unit; 59 variable deletion unit; 60 program; 100 development support device; 102 processor; 104 main memory; 111 communication interface; 114 I/O interface; 115 operation unit; 117 display interface; 118 display unit; 120 storage device; 125 internal bus; 200 control device; 203 variable list; 210 control program; 210s source program; 211 execution code; 212 memory region; 214 device-side link setting code; 220 ladder circuit; 221 input-side bus bar; 222 output-side bus bar; 224 contact; 226 coil; 227 connection line; 250 network interface; 300 external apparatus; 300A, 300B, 300C device; 301A, 301B, 301C apparatus; 305, 305C variable mapping; 305A subscription setting; 305B tag data link setting; NW1, NW2 network; OPT1 to OPT4, aa to cc variable.

## Claims

1. A development support device (100) for supporting development of a control program (210) for a control device (200) that controls a control target (300), the development support device comprising:
a storage unit (104, 120) configured to store a source code (51) of the control program and a first list (52) that declares a plurality of variables used in the source code;
an extraction unit (55) configured to extract a first variable (V1) that is unused in the source code from the plurality of variables on the first list;
**characterized in that** the development support device further comprises:
an acquisition unit (56) configured to acquire information (53, 54) for specifying a second variable (V2) having a possibility of being exchanged between the control target and the control device out of the plurality of variables in a state before execution of the control program; and
a determination unit (57) configured to determine that a variable that is the same as the second variable out of the first variable is indelible from the first list on a basis of a result of extraction by the extraction unit and the information acquired by the acquisition unit in the state before execution of the control program;
wherein the determination unit (57) is configured to determine that a third variable (V3) that is not the same as the second variable (V2) out of the first variable (V1) is delible from the first list (52) on a basis of a result of extraction by the extraction unit (55) and the information acquired by the acquisition unit (56) in the state before execution of the control program (210).

2. The development support device (100) according to claim 1,
wherein
each of the plurality of variables has attribute information (53) that defines whether the variable is public to a network (NW1, NW2) including the control target (300) and the control device (200),
the acquisition unit (56) is configured to acquire the attribute information as information for specifying the second variable (V2), and
the determination unit (57) is configured determine that a variable specified to be public to the network by the attribute information out of the plurality of variables is indelible from the first list as the second variable.

3. The development support device (100) according to claim 1,
wherein the acquisition unit (56) is configured to acquire a second list (54) indicating a variable specified to be a target of exchange between the control target (300) and the control device (200) when the control program (210) is executed, as information for specifying the second variable (V2), in the state before execution of the control program.

4. The development support device (100) according to claim 3,
wherein
the acquisition unit (56) is configured to acquire the second list (54) of one or more projects specified by a user as the information, and
the determination unit (57) is configured to execute the determination by regarding a variable included in the second list in at least one of the projects out of the plurality of variables to be the second variable (V2).

5. The development support device (100) according to claim 1, further comprising a variable deletion unit (59) configured to delete the third variable (V3) from the first list (52).

6. The development support device (100) according to claim 5, further comprising an interface unit (58) for inputting an operation of a user, wherein
the extraction unit (55), the acquisition unit (56), and the determination unit (57) are configured to operate in accordance with an input of a first operation that activates deletion processing of an unnecessary variable on the interface unit,
the interface unit is configured to output a message asking the user whether to delete the third variable (V3) extracted by the determination unit from the first list (52),
and
the variable deletion unit (59) is configured to operate in accordance with an input of a second operation that gives a command for deleting the third variable in accordance with the message on the interface unit.

7. A development support method of a control program (210) for a control device (200) that controls a control target (300), the development support method being executed by a computer, the development support method comprising:
extracting (S120) a first variable (V1) that is unused in a source code (51) of the control program from a first list (52) that declares a plurality of variables used in the source code;
**characterized in that** the development support method further comprises the steps of:
acquiring (S130, S131) information (53, 54) for specifying a second variable (V2) having a possibility of being exchanged between the control target and the control device out of the plurality of variables in a state before execution of the control program; and
determining (S140, S141, S160) that a variable that is the same as the second variable out of the first variable is indelible from the first list on a basis of a result of extraction by the extracting and the information acquired by the acquiring in the state before execution of the control program;
wherein the determining includes:
determining (S160) that a third variable (V3) that is not the same as the second variable (V2) out of the first variable (V1) is delible from the first list (52) on a basis of a result of extraction by the extracting (S120) and the information acquired by the acquiring (S130, S131) in the state before execution of the control program (210).

8. The development support method according to claim 7, wherein
each of the plurality of variables has attribute information (53) that defines whether the variable is public to a network (NW1, NW2) including the control target (300) and the control device (200),
the acquiring information includes
acquiring (S130) the attribute information (53) as information for specifying the second variable (V2), and
the determining includes
determining (S140) that a variable specified to be public to the network by the attribute information out of the plurality of variables is indelible from the first list as the second variable.

9. The development support method according to claim 7, wherein
the acquiring information includes
acquiring (S131) a second list (54) indicating a variable specified to be a target of exchange between the control target (300) and the control device (200) when the control program (210) is executed, as information for specifying the second variable (V2), in the state before execution of the control program.

10. The development support method according to claim 9, wherein
the acquiring (S131) the second list includes
acquiring the second list (54) of one or more projects specified by a user as the information, and
the determining (S141) includes
executing the determination by regarding a variable included in the second list in at least one of the projects out of the plurality of variables to be the second variable (V2).

11. The development support method according to claim 8, further comprising,
deleting (S180) the third variable (V3) from the first list (52).

12. The development support method according to claim 11, wherein
the extracting (S120) the first variable (V1), the acquiring (S130, S131) information (53, 54), and the determining (S140, S141, S160) are operated in accordance with an input of a first operation that activates deletion processing of an unnecessary variable on an interface unit (58) for inputting an operation of a user, and
the development support method further comprises:
outputting (S172) a message asking the user whether to delete the third variable (V3) on the interface unit; and
deleting (S175, S180) the third variable from the first list (52) in accordance with an input of a second operation on the interface unit.

13. A development support program (50) of a control program (210) for a control device (200) that controls a control target (300), the development support program causing one or more processors to perform the development support method of any one of claim 7 to 12.

## Patentansprüche

1. Entwicklungsunterstützungsvorrichtung (100) zur Unterstützung bei der Entwicklung eines Steuerprogramms (210) für eine Steuervorrichtung (200), die ein Steuerziel (300) steuert, wobei die Entwicklungsunterstützungsvorrichtung Folgendes umfasst:
eine Speichereinheit (104, 120), die dazu ausgelegt ist, einen Quellcode (51) des Steuerprogramms und eine erste Liste (52) zu speichern, die eine Vielzahl von im Quellcode verwendeten Variablen deklariert;
eine Extraktionseinheit (55), die dazu ausgelegt ist, eine erste Variable (V1), die im Quellcode ungenutzt ist, aus der Vielzahl von Variablen auf der ersten Liste zu extrahieren;
**dadurch gekennzeichnet, dass** die Entwicklungsunterstützungsvorrichtung weiters Folgendes umfasst:
eine Erfassungseinheit (56), die dazu ausgelegt ist, Informationen (53, 54) zur Spezifizierung einer zweiten Variable (V2), für welche die Möglichkeit besteht, dass sie zwischen dem Steuerziel und der Steuervorrichtung ausgetauscht wird, aus der Vielzahl von Variablen in einem Zustand zu erfassen, bevor das Steuerprogramm ausgeführt wird; und
eine Bestimmungseinheit (57), die dazu ausgelegt ist, auf Basis eines Ergebnisses der Extraktion durch die Extraktionseinheit und der Informationen, die durch die Erfassungseinheit in dem Zustand vor Ausführung des Steuerprogramms erfasst wurden, zu bestimmen, dass eine Variable, welche die gleiche ist wie die zweite Variable aus der ersten Variable, aus der ersten Liste unlöschbar ist;
wobei die Bestimmungseinheit (57) dazu ausgelegt ist, auf Basis eines Ergebnisses der Extraktion durch die Extraktionseinheit (55) und der Informationen, die von der Erfassungseinheit (56) in dem Zustand vor Ausführung des Steuerprogramms (210) erfasst wurden, zu bestimmen, dass eine dritte Variable (V3), die nicht gleich ist wie die zweite Variable (V2) aus der ersten Variable (V1), aus der ersten Liste (52) löschbar ist.

2. Entwicklungsunterstützungsvorrichtung (100) nach Anspruch 1, wobei
jede aus der Vielzahl von Variablen Attributinformationen (53) aufweist, die definieren, ob die Variable öffentlich für ein Netzwerk (NW1, NW2) ist, welches das Steuerziel (300) und die Steuervorrichtung (200) umfasst,
die Erfassungseinheit (56) dazu ausgelegt ist, die Attributinformationen als Informationen zur Spezifizierung der zweiten Variable (V2) zu erfassen, und
die Bestimmungseinheit (57) dazu ausgelegt ist, zu bestimmen, dass eine Variable aus der Vielzahl von Variablen, die aufgrund der Attributinformationen als öffentlich für das Netzwerk spezifiziert ist, als die zweite Variable aus der ersten Liste unlöschbar ist.

3. Entwicklungsunterstützungsvorrichtung (100) nach Anspruch 1, wobei die Erfassungseinheit (56) dazu ausgelegt ist, in dem Zustand vor Ausführung des Steuerprogramms eine zweite Liste (54), die eine Variable angibt, die als ein Ziel eines Austauschs zwischen dem Steuerziel (300) und der Steuervorrichtung (200) spezifiziert ist, wenn das Steuerprogramm (210) ausgeführt wird, als Informationen zum Spezifizieren der zweiten Variable (V2) zu erfassen.

4. Entwicklungsunterstützungsvorrichtung (100) nach Anspruch 3, wobei
die Erfassungseinheit (56) dazu ausgelegt ist, die zweite Liste (54) eines oder mehrerer Projekte, die von einem Benutzer spezifiziert werden, als die Informationen zu erfassen, und
die Bestimmungseinheit (57) dazu ausgelegt ist, die Bestimmung durch Beachten einer Variable, die in der zweiten Liste in zumindest einem der Projekte enthalten ist, aus der Vielzahl von Variablen als die zweite Variable (V2) auszuführen.

5. Entwicklungsunterstützungsvorrichtung (100) nach Anspruch 1, die weiters eine Variablenlöscheinheit (59) umfasst, die dazu ausgelegt ist, die dritte Variable (V3) aus der ersten Liste (52) zu löschen.

6. Entwicklungsunterstützungsvorrichtung (100) nach Anspruch 5, die weiters eine Schnittstelleneinheit (58) zur Eingabe einer Operation eines Benutzers umfasst, wobei
die Extraktionseinheit (55), die Erfassungseinheit (56) und die Bestimmungseinheit (57) dazu ausgelegt sind, gemäß einer Eingabe einer ersten Operation zu arbeiten, die eine Löschverarbeitung einer unnötigen Variable auf der Schnittstelleneinheit aktiviert,
die Schnittstelleneinheit dazu ausgelegt ist, eine Nachricht auszugeben, die den Benutzer fragt, ob die dritte Variable (V3), die von der Bestimmungseinheit aus der ersten Liste (52) extrahiert wurde, zu löschen ist, und
die Variablenlöscheinheit (59) dazu ausgelegt ist, gemäß einer Eingabe einer zweiten Operation zu arbeiten, die einen Befehl zum Löschen der dritten Variable gemäß der Nachricht auf der Schnittstelleneinheit gibt.

7. Entwicklungsunterstützungsverfahren eines Steuerprogramms (210) für eine Steuervorrichtung (200), die ein Steuerziel (300) steuert, wobei das Entwicklungsunterstützungsverfahren von einem Computer ausgeführt wird, wobei das Entwicklungsunterstützungsverfahren Folgendes umfasst:
Extrahieren (S120) einer ersten Variable (V1), die in einem Quellcode (51) des Steuerprogramms ungenutzt ist, aus einer ersten Liste (52), die eine Vielzahl von Variablen angibt, die im Quellcode genutzt werden;
**dadurch gekennzeichnet, dass** das Entwicklungsunterstützungsverfahren weiters folgende Schritte umfasst:
Erfassen (S130, S131) von Informationen (53, 54) zum Spezifizieren einer zweiten Variable (V2), für welche die Möglichkeit besteht, dass sie zwischen dem Steuerziel und der Steuervorrichtung ausgetauscht wird, aus der Vielzahl von Variablen in einem Zustand, bevor das Steuerprogramm ausgeführt wird; und
Bestimmen (S140, S141, S160), dass eine Variable, welche die gleiche ist wie die zweite Variable aus der ersten Variablen, aus der ersten Liste unlöschbar ist, auf Basis eines Extraktionsergebnisses und der Informationen, die durch Erfassen vor Ausführung des Steuerprogramms erfasst wurden;
wobei das Bestimmen Folgendes umfasst:
Bestimmen (S160), dass eine dritte Variable (V3), die nicht gleich ist wie die zweite Variable (V2) aus der ersten Variable (V1), aus der ersten Liste (52) löschbar ist, auf Basis eines Extraktionsergebnisses durch das Extrahieren (S120) und der Informationen, die durch das Erfassen (S130, S131) vor Ausführung des Steuerprogramms (210) erfasst wurden.

8. Entwicklungsunterstützungsverfahren nach Anspruch 7, wobei jede aus der Vielzahl von Variablen Attributinformationen (53) aufweist, die definieren, ob die Variable öffentlich für ein Netzwerk (NW1, NW2) ist, welches das Steuerziel (300) und die Steuervorrichtung (200) umfasst,
wobei die Erfassungsinformationen Folgendes umfassen:
Erfassen (S130) der Attributinformationen (53) als Informationen zur Spezifizierung einer zweiten Variable (V2) und
das Bestimmen Folgendes umfasst:
Bestimmen (S140), dass eine Variable der Vielzahl von Variablen, die aufgrund der Attributinformationen als öffentlich für das Netzwerk spezifiziert ist, als die zweite Variable aus der ersten Liste unlöschbar ist.

9. Entwicklungsunterstützungsverfahren nach Anspruch 7, wobei
das Erfassen von Informationen Folgendes umfasst:
Erfassen (S131) einer zweiten Liste (54), die eine Variable angibt, die als ein Ziel eines Austauschs zwischen dem Steuerziel (300) und der Steuervorrichtung (200) spezifiziert ist, wenn das Steuerprogramm (210) ausgeführt wird, als Informationen zum Spezifizieren der zweiten Variable (V2), in dem Zustand vor Ausführung des Steuerprogramms.

10. Entwicklungsunterstützungsverfahren nach Anspruch 9, wobei
das Erfassen (S131) der zweiten Liste das Erfassen der zweiten Liste (54) eines oder mehrerer Projekte, die von einem Benutzer spezifiziert werden, als die Informationen umfasst und
das Bestimmen (S141) Folgendes umfasst
das Ausführen der Bestimmung durch Betrachten einer Variable, die in der zweiten Liste in zumindest einem der Projekte enthalten ist, aus der Vielzahl von Variablen als die zweite Variable (V2) umfasst.

11. Entwicklungsunterstützungsverfahren nach Anspruch 8, das weiters Folgendes umfasst:
Löschen (S180) der dritten Variable (V3) aus der ersten Liste (52).

12. Entwicklungsunterstützungsverfahren nach Anspruch 11, wobei
das Extrahieren (S120) der ersten Variable (V1), das Erfassen (S130, S131) von Informationen (53, 54) und das Bestimmen (S140, S141, S160) gemäß einer Eingabe einer ersten Operation ausgeführt werden, die eine Löschverarbeitung einer unnötigen Variable auf einer Schnittstelleneinheit (58) zur Eingabe einer Operation eines Benutzers aktiviert, und
wobei das Entwicklungsunterstützungsverfahren weiters Folgendes umfasst:
Ausgeben (S172) einer Nachricht, die den Benutzer fragt, ob die dritte Variable (V3) zu löschen ist, auf der Schnittstelleneinheit; und
Löschen (S175, S180) der dritten Variable aus der ersten Liste (52) gemäß einer Eingabe einer zweiten Operation auf der Schnittstelleneinheit.

13. Entwicklungsunterstützungsprogramm (50) eines Steuerprogramms (210) für eine Steuervorrichtung (200), die ein Steuerziel (300) steuert, wobei das Entwicklungsunterstützungsprogramm bewirkt, dass ein oder mehrere Prozessoren ein Entwicklungsunterstützungsverfahren nach einem der Ansprüche 7 bis 12 ausführen.

## Revendications

1. Dispositif de support de développement (100) destiné à supporter le développement d'un programme de commande (210) pour un dispositif de commande (200) qui commande une cible de commande (300), le dispositif de support de développement comprenant :
une unité de stockage (104, 120) configurée pour stocker un code source (51) du programme de commande et une première liste (52) qui déclare une pluralité de variables utilisées dans le code source ;
une unité d'extraction (55) configurée pour extraire une première variable (V1) qui est inutilisée dans le code source à partir de la pluralité de variables sur la première liste ;
**caractérisé en ce que** le dispositif de support de développement comprend en outre :
une unité d'acquisition (56) configurée pour acquérir des informations (53, 54) pour spécifier une deuxième variable (V2) présentant une possibilité d'être échangée entre la cible de commande et le dispositif de commande parmi la pluralité de variables dans un état avant l'exécution du programme de commande ; et
une unité de détermination (57) configurée pour déterminer qu'une variable qui correspond à la première variable et qui est identique à la deuxième variable ne peut pas être supprimée de la première liste sur la base d'un résultat d'extraction par l'unité d'extraction et des informations acquises par l'unité d'acquisition dans l'état avant l'exécution du programme de commande ;
dans lequel l'unité de détermination (57) est configurée pour déterminer qu'une troisième variable (V3) qui correspond à la première variable (V1) et qui n'est pas identique à la deuxième variable (V2) peut être supprimée de la première liste (52) sur la base d'un résultat d'extraction par l'unité d'extraction (55) et des informations acquises par l'unité d'acquisition (56) dans l'état avant l'exécution du programme de commande (210).

2. Dispositif de support de développement (100) selon la revendication 1, dans lequel
chacune de la pluralité de variables présente des informations d'attribut (53) qui définissent si la variable est publique pour un réseau (NW1, NW2) incluant la cible de commande (300) et le dispositif de commande (200),
l'unité d'acquisition (56) est configurée pour acquérir les informations d'attribut en tant qu'informations pour spécifier la deuxième variable (V2), et
l'unité de détermination (57) est configurée pour déterminer qu'une variable spécifiée pour être publique pour le réseau par les informations d'attribut parmi la pluralité de variables ne peut pas être supprimée de la première liste en tant que deuxième variable.

3. Dispositif de support de développement (100) selon la revendication 1, dans lequel l'unité d'acquisition (56) est configurée pour acquérir une seconde liste (54) indiquant une variable spécifiée comme étant une cible d'échange entre la cible de commande (300) et le dispositif de commande (200) lorsque le programme de commande (210) est exécuté, en tant qu'informations pour spécifier la deuxième variable (V2), dans l'état avant l'exécution du programme de commande.

4. Dispositif de support de développement (100) selon la revendication 3, dans lequel
l'unité d'acquisition (56) est configurée pour acquérir la seconde liste (54) d'un ou plusieurs projets spécifiés par un utilisateur en tant qu'informations, et
l'unité de détermination (57) est configurée pour exécuter la détermination en considérant une variable incluse dans la seconde liste dans au moins un certain des projets parmi la pluralité de variables comme étant la deuxième variable (V2).

5. Dispositif de support de développement (100) selon la revendication 1, comprenant en outre une unité de suppression de variable (59) configurée pour supprimer la troisième variable (V3) à partir de la première liste (52).

6. Dispositif de support de développement (100) selon la revendication 5, comprenant en outre une unité d'interface (58) pour entrer une opération d'un utilisateur, dans lequel
l'unité d'extraction (55), l'unité d'acquisition (56) et l'unité de détermination (57) sont configurées pour fonctionner conformément à une entrée d'une première opération qui active le traitement de suppression d'une variable inutile sur l'unité d'interface,
l'unité d'interface est configurée pour délivrer en sortie un message demandant à l'utilisateur de supprimer ou non la troisième variable (V3) extraite par l'unité de détermination à partir de la première liste (52), et
l'unité de suppression de variable (59) est configurée pour fonctionner conformément à une entrée d'une seconde opération qui donne une commande pour supprimer la troisième variable conformément au message sur l'unité d'interface.

7. Procédé de support de développement d'un programme de commande (210) pour un dispositif de commande (200) qui commande une cible de commande (300), le procédé de support de développement étant exécuté par un ordinateur, le procédé de support de développement comprenant l'étape consistant à :
extraire (S120) une première variable (V1) qui est inutilisée dans un code source (51) du programme de commande à partir d'une première liste (52) qui déclare une pluralité de variables utilisées dans le code source ;
**caractérisé en ce que** le procédé de support de développement comprend en outre les étapes consistant à :
acquérir (S130, S131) des informations (53, 54) pour spécifier une deuxième variable (V2) présentant une possibilité d'être échangée entre la cible de commande et le dispositif de commande parmi la pluralité de variables dans un état avant l'exécution du programme de commande ; et
déterminer (S140, S141, S160) qu'une variable qui correspond à la première variable et qui est identique à la deuxième variable ne peut pas être supprimée de la première liste sur la base d'un résultat d'extraction par l'extraction et des informations acquises par l'acquisition dans l'état avant l'exécution du programme de commande ;
dans lequel la détermination inclut l'étape consistant à :
déterminer (S160) qu'une troisième variable (V3) qui correspond à la première variable (V1) et qui n'est pas identique à la deuxième variable (V2) peut être supprimée de la première liste (52) sur la base d'un résultat d'extraction par l'extraction (S120) et des informations acquises par l'acquisition (S130, S131) dans l'état avant l'exécution du programme de commande (210).

8. Dispositif de support au développement selon la revendication 7, dans lequel
chacune de la pluralité de variables présente des informations d'attribut (53) qui définissent si la variable est publique pour un réseau (NW1, NW2) incluant la cible de commande (300) et le dispositif de commande (200),
l'acquisition d'informations inclut l'étape consistant à
acquérir (S130) les informations d'attribut (53) en tant qu'informations pour spécifier la deuxième variable (V2), et
la détermination inclut l'étape consistant à
déterminer (S140) qu'une variable spécifiée pour être publique pour le réseau par les informations d'attribut parmi la pluralité de variables ne peut pas être supprimée à partir de la première liste en tant que deuxième variable.

9. Dispositif de support de développement selon la revendication 7, dans lequel
l'acquisition d'informations inclut l'étape consistant à
acquérir (S131) une seconde liste (54) indiquant une variable spécifiée comme étant une cible d'échange entre la cible de commande (300) et le dispositif de commande (200) lorsque le programme de commande (210) est exécuté, en tant qu'informations pour spécifier la deuxième variable (V2), dans l'état avant l'exécution du programme de commande.

10. Dispositif de support de développement selon la revendication 9, dans lequel
l'acquisition (S131) de la seconde liste inclut l'étape consistant à
acquérir la seconde liste (54) d'un ou plusieurs projets spécifiés par un utilisateur en tant qu'informations, et
la détermination (S141) inclut l'étape consistant à
exécuter la détermination en considérant une variable incluse dans la seconde liste dans au moins un des projets parmi la pluralité de variables comme étant la deuxième variable (V2).

11. Procédé de support de développement selon la revendication 8, comprenant en outre l'étape consistant à
supprimer (S180) la troisième variable (V3) à partir de la première liste (52).

12. Dispositif de support de développement selon la revendication 11, dans lequel
l'extraction (S120) de la première variable (V1), l'acquisition (S130, S131) d'informations (53, 54) et la détermination (S140, S141, S160) sont effectuées conformément à une entrée d'une première opération qui active un traitement de suppression d'une variable inutile sur une unité d'interface (58) pour entrer une opération d'un utilisateur, et
le procédé de support de développement comprend en outre les étapes consistant à :
délivrer en sortie (S172) un message demandant à l'utilisateur de supprimer ou non la troisième variable (V3) sur l'unité d'interface ; et
supprimer (S175, S180) la troisième variable à partir de la première liste (52) conformément à une entrée d'une seconde opération sur l'unité d'interface.

13. Programme de support de développement (50) d'un programme de commande (210) pour un dispositif de commande (200) qui commande une cible de commande (300), le programme de support de développement amenant un ou plusieurs processeurs à exécuter le procédé de support de développement selon l'une quelconque des revendications 7 à 12.
